# EUROPÄISCHE PATENTANMELDUNG

(11) **EP 2 258 469 A2**
(43) Veröffentlichungstag der Anmeldung: **08.12.2010**
(21) Anmeldenummer: 10005168.9
(22) Anmeldetag: 18.05.2010
(51) Int. Cl.: B01J 19/10, C09B 67/00, C09B 67/46

(54) **Verfahren zur Aufbereitung pigmentlerter Druckfarbe**

(30) Priorität: 27.05.2009 CH 8162009
(71) Anmelder: Amcor Flexibles Kreuzlingen Ltd., 8280 Kreuzlingen (CH)
(72) Erfinder: Weber, Christian, 78262 Gailingen (DE); Reinhold, Matthias, 8212 Neuhausen (CH); Rosenberger, Karolina, 8218 Osterfingen (CH)
(74) Vertreter: Burkhart, Hans

(57) **Zusammenfassung**

Bei einem Verfahren zur Aufbereitung pigmentierter Druckfarbe (12) wird die Druckfarbe (12) in einem Behälter (14) mit Ultraschall behandelt und gleichzeltlg gerührt. Eine zur Durchführung des Verfahrens geeignete Vorrichtung umfasst einen Behälter (14) zur Aufnahme von Druckfarbe (12), eine in den Behälter (14) einsetzbare Ultraschall-Elnhelt (22) und eine in den Behälter (14) einsetzbare Rühreinhelt (16). Ultraschall-Einheit (22) und Rühreinhelt (16) sind an einem auf den Behälter (14) aufsetzbaren Deckel (15) angeordnet.

## Beschreibung

Die Erfindung betrifft ein Verfahren zur Aufbereitung pigmentierter Druckfarbe durch Entfernen von Pigmentagglomeratlonen.

Ein Im Tiefdruck häufig auftretendes Fehierbild ist die sogenannte Streifenbildung. Optisch verlaufen die unerwünschten Streifen, welche Im bedruckten und unbedruckten Bereich sichtbar sind, parallel zur Druckrichtung. Ursachen für die Streifenbildung sind Agglomerationen von Pigmenten in der pigmentierten Druckfarbe. Übllcherweise werden Filter und/oder Magnete Im Farbkreislauf eingesetzt, um Farbverklumpungen und Fremdkörper aus dem Farbkreislauf zu entfernen. Insbesondere bei mehrfachem Einsatz der Druckfarbe treten vermehrt Agglomerationen von Pigmenten und anderen Bestandteilen der Druckfarbe auf.

Mit den heute üblichen Massnahmen zur Aufbereitung von Druckfarbe und durch Einbau von Filtern und/oder Magneten In einen Farbkreislauf gelingt es zwar, die Druckfarbe im Prozess stabil zu halten. Nach längerer Lagerung sind die genannten Massnahmen Jedoch nicht in der Lage, die Druckfarbe auf den Qualltätsstanderd frischer, neuer Druckfarbe zu heben.

Der Erfindung liegt die Aufgabe zugrunde, ein Verfahren der eingangs genannten Art zu schaffen, mit weichem auch bereits verwendete und gelagerte Druckfarbe derart aufbereitet werden kann, dass sie auch nach längerer Lagerung wieder ohne Qualitätselribussen in einer Druckmaschine eingesetzt werden kann.

Zur erfindungsgemässen Lösung der Aufgabe führt, dass die Druckfarbe in einem Behälter mit Ultraschall behandelt und gleichzeltig gerührt wird.

Eine zur Durchführung des erfindungsgemässen Verfahrens geeignete Vorrichtung umfasst einen Behälter zur Aufnahme von Druckfarbe, eine In den Behälter einsetzbare Ultraschall-Einhelt und eine In den Behälter einsetzbare Rühreinhelt.

Bevorzugt sind Ultraschall-Einhelt und Rühreinheit an einem auf den Behälter aufsetzbaren Deckel angeordnet.

Zweckmässigerweise umfasst die Ultraschall-Einheit eine stabförmige Sonotrode und die Rühreinheit eine Rührachse mit endständigem Rührpropeller, und Sonotrode und Rührachse sind parallel zueinander und bei auf dem Behälter aufgesetztem Deckel parallel zu einer vertikalen Behälterachse angeordnet.

Die Druckfarbe wird jeweils vor einem Einsatz in der Druckmaschine aufbereltet. Die Ultraschallbehandlung bewirkt, dass Pigmentagglomerationen aufgelöst werden. Die Behandlung mittels Ultraschall kann sowohl bei Verpackungsfarben als auch bei Druckfarben für technische Anwendungen oder spezielle Effekte zum Einsatz kommen.

Insbesondere technische Druckfarben neigen aufgrund Ihrer Plgmenteigenschaften häufig zu Agglomeration und Sedimentation. Die vorgeschlagene Vorbehandlung mittels Ultraschall verbessert die Homogenität der Farbe und beseitigt in Zusammenwirkung mit einer Rühreinhelt die Sedimentation. Das Problem der Sedimentation tritt Insbesondere dann auf, wenn die Druckfarbe bei niedriger Viskosität eingelagert wurde oder die farbgebenden, funktionsgebenden oder effektgebenden Pigmente ein hohes spezifisches Gewicht aufweisen.

Das Fehlerbild der Strelfen wird minimiert, indem die Homogenität der Druckfarbe durch eine mehrere Minuten dauernde Ultraschallbehandlung verbessert wird. Dies gilt auch für technische Anwendungen und Druckfarben mit Spezialeffekten.

Die zur Auflösung von Plgmentagglomerationen benötigte Ultraschall-Frequenz liegt Im üblichen Bereich von etwa 20 - 100 kHz. In gewissen Fällen kann eine wirksame Deagglomeration auch ohne gleichzeitiges Rühren der Druckfarbe erzielt werden. Durch eine kombinierte Behandlung Ultraschall/Rühren wird jedoch der gewünschte Grad der Deagglomeration nach einer kürzeren Behandlungszeit erreicht.

Das erfindungsgemässe Verfahren Ist sowohl für wasserbasierte als auch für lösemittelbasierte Druckfarben geeignet.

Eine ausreichende Druckfarbenaufbereitung wird im allgemeinen bereits nach wenigen Minuten Behandlungsdauer erreicht.

Ziel der Behandlung ist es, grössere Pigmentverbunde, d.h. sog. Agglomaratlonen, zu lösen und sedimentierte Farbpartikel wieder glelchmässig in die Druckfarbe einzuarbeiten.

Bevorzugt wird das Aufbereltungsverfahren mittels einer portablen Aufbereitungseinheit, bestehend aus Ultraschalleinheit und Rühreinheit, durchgeführt.

Die Rühreinhelt hat die Aufgabe, sedimentierte Druckfarbe In den Bereich der Ultraschall-Elnhelt zu transportieren, sodass diese vor Ort fein disperglert werden kann.

Nach Abschluss der Aufbereitung ist die Druckfarbe von Agglomerationen befreit und kann In der Druckmaschine eingesetzt werden. Die Massnahme bewirkt eine sehr gute Homogenität, beseitigt die Sedimentation und führt so zu einer qualitativ gesteigertem Druckverhalten von pigmentierten Druckfarben. Mit dem erflndungsgemässen Verfahren lassen sich die folgenden Vorteile erzielen,
- Abnahme der Partikelgrösse, Auflösen von Agglomerationen, dadurch Vermeldung von Streifenbildung.
- Auffrischen von Druckfarben, dadurch ergibt sich eine verbesserte Homogenität.
- Verhindern von Sedimentation.
- Keine Modifikation der Farbwanne erforderlich.
- Geringer Reinigungsaufwand, nur Ultraschallgeber und Rührer müssen gereinigt werden.
- Verhältnlsmässig geringe Investitionskosten, da nur eine Einheit für mehrere Druckmaschinen erforderlich ist.

Weitere Vorteile, Merkmale und Einzelheiten der Erfindung ergeben sich aus der nachfolgenden Beschreibung bevorzugter Ausführungsbelsplele sowie anhand der Zeichnung, die lediglich zur Erläuterung dient und nicht einschränkend auszulegen ist. Die Zeichnung zeigt schematisch In
- Fig. 1: eine Seitenansicht einer Aufbareftungseinhelt für Druckfarben;
- Fig. 2: den Funktionsablauf bei der Aufbereitung von Druckfarbe ineinem Druckprozess.

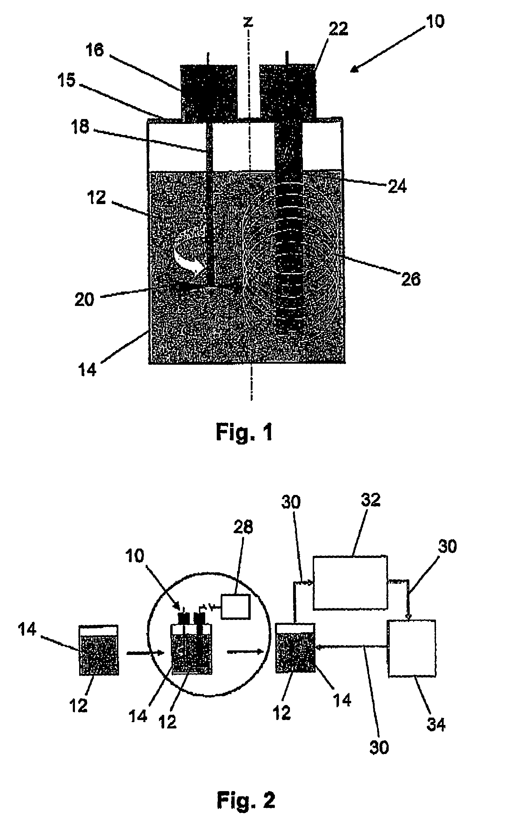

Eine in Fig. 1 dargestellte Aufbereitungseinheit 10 für Druckfarbe 12 Ist an elnem abnehmbaren Deckel 15 eines Behälters 14 zur Aufnahme der aufzubereitenden Druckfarbe 12 befestigt. Die Aufbareftungseinhelt 10 umfasst eine Rühreinhelt 16 mit einer parallel zu einer vertikalen Behälterachse z angeordneten Achswelle 18 mit endständig montiertem Rührpropeller 20 und eine Ultraschall-Einheit 22 mit einer ebenfalls parallel zur Behälterachse z angeordneten, stabförmigen Sonotrode 24 zur Erzeugung von Ultraschallschwingungen 26.

Die Rührachse 18 mit dem Rührpropeller 20 ist mit einem In der Zeichnung nicht wiedergegebenen Antrieb zur Erzeugung einer Rührbewegung verbunden. Dieser Antrieb kann ein Elektromotor oder ein Luftantrieb sein.

Die Sonotrode 24 der Ultraschall-Einheit 22 wird mittels eines Ultraschall-Generators 26 zu mechanischen Vibrationen angeregt. Die Schwingungsfrequenz liegt üblicherwelse zwischen 20 und 100 kHz.

Fig. 2 zeigt einen möglichen Ablauf zur Aufbereitung von Druckfarbe 12, die In einem Druckfarbenkrelslauf 30 einer Druckmaschine 32 verwendet wird. In den Druckfarbenkreislauf 30 ist üblicherweise eine Reinigungseinhelt auf Filter-und/oder Magnetbasis geschaltet. Nach Beendigung des Druckvorgangs wird die Im Druckfarbenkreislauf 30 vorhandene Druckfarbe 12 Im Druckfarbenbehälter 14 gesammelt und bis zur Wiederverwendung gelagert (A). Vor der Wiederverwendung wird die gelagerte Druckfarbe 12 jeweils Im Druckfarbenbehälter 14 mittels der Aufbereitungseinheit 10 in einer Druckfarben-Aufbereitungsstation 36 aufbereitet (B) und nachfolgend der Druckfarbenbehälter 14 mit der aufbereiteten Druckfarbe 12 In den Drucktarbenkreislauf 30 der Druckmaschine 32 geschaltet (C).

Ein gewünschter Farbton kann auch aus unterschiedlichen Farben gemischt sein. Eine abschllessende Ultraschallbehandlung nach dem Mischen der Farben dient hier auch zur Optimierung der Verdruckbarkelt.

### Bezugszeichenliste

- 10: Aufbereitungseinheit
- 12: Druckfarbe
- 14: Druckfarbenbehälter
- 15: Deckel
- 16: Rühreinhelt
- 18: Rührachse
- 20: Rührpropeller
- 22: Ultraschallelnhett
- 24: stabförmige Sonotrode
- 26: Ultraschallwellen
- 28: Ultraschall-Generator
- 30: Druckfarbenkreislauf
- 32: Druckmaschine
- 34: Reinigungseinhelt
- 36: Druckforben-Aufbereltungsstation
- z: vertikale Achse

## Patentansprüche

1. Verfahren zur Aufbereitung pigmentierter Druckfarbe (12) durch Entfernen von Plgmentagglomerationen,
**dadurch gekennzeichnet, dass**
die Druckfarbe (12) in einem Behälter (14) mit Ultraschall behandelt und gleichzeitig gerührt wird.

2. Vorrichtung zur Durchführung des Verfahrens nach Anspruch 1, umfassend einen Behälter (14) zur Aufnahme von Druckfarbe (12), eine In den Behälter (14) einsetzbare Ultraschall-Einheit (22) und eine In den Behälter (14) einsetzbare Rühreinheit (16).

3. Vorrichtung nach Anspruch 2, **dadurch gekennzeichnet, dass** Ultraschall-Einheit (22) und Rühreinheit (16) an einem auf den Behälter (14) aufsetzbaren Deckel (15) angeordnet sind.

4. Vorrichtung nach Anspruch 3, **dadurch gekennzeichnet, dass** die Ultraschall-Elnhelt (22) eine stabförmige Sonotrode (24) und die Rühreinhelt (16) eine Rührachse (18) mit endständigem Rührpropeller (20) umfasst und Sonotrode (24) und Rührachse (18) parallel zueinander und bei auf dem Behälter (14) aufgesetztem Deckel (15) parallel zu einer vertikalen Behälterachse (z) angeordnet sind.
